# EUROPÄISCHE PATENTSCHRIFT

(11) **EP 1 749 042 B1**
(45) Veröffentlichungstag und Bekanntmachung des Hinweises auf die Patenterteilung: **02.01.2008**
(21) Anmeldenummer: 05715459.3
(22) Anmeldetag: 23.02.2005
(51) Int. Cl.: C08G 63/78, C08G 63/672, C07D 307/08, C08G 65/20

(54) **VERFAHREN ZUR HERSTELLUNG VON ELASTOMEREN COPOLYESTERN**
METHOD FOR PRODUCING ELASTOMERIC COPOLYESTERS
PROCEDE DE PRODUCTION DE COPOLYESTERS ELASTOMERE

(30) Priorität: 11.05.2004 DE 102004023105
(43) Veröffentlichungstag der Anmeldung: 07.02.2007
(73) Patentinhaber: Lurgi Zimmer GmbH, 60295 Frankfurt am Main (DE)
(72) Erfinder: KÄMPF, Rudolf, 63583 Haingründau (DE)
(74) Vertreter: Meyer-Dulheuer, Karl-Hermann
(86) Internationale Anmeldenummer: PCT/EP2005/001853
(87) Internationale Veröffentlichungsnummer: WO 2005/116111

(56) Entgegenhaltungen:
- WO-A-95/11267
- US-A- 4 081 494
- DATABASE WPI Section Ch, Week 198140 Derwent Publications Ltd., London, GB; Class A41, AN 1981-72779D XP002327989 -& JP 56 104881 A (TORAY IND INC) 20. August 1981 (1981-08-20)
- DATABASE WPI Section Ch, Week 198949 Derwent Publications Ltd., London, GB; Class A23, AN 1989-361760 XP002327990 -& JP 01 272632 A (KANEBO LTD) 31. Oktober 1989 (1989-10-31)
- DATABASE WPI Section Ch, Week 198244 Derwent Publications Ltd., London, GB; Class E13, AN 1982-93523E XP002327991 -& JP 57 154179 A (TORAY IND INC) 22. September 1982 (1982-09-22)
- DATABASE WPI Section Ch, Week 198340 Derwent Publications Ltd., London, GB; Class A23, AN 1983-779388 XP002327992 -& JP 58 142909 A (TEIJIN LTD) 25. August 1983 (1983-08-25)
- DATABASE WPI Section Ch, Week 198239 Derwent Publications Ltd., London, GB; Class A23, AN 1982-82521E XP002327993 -& JP 57 135828 A (TORAY IND INC) 21. August 1982 (1982-08-21)
- DATABASE WPI Section Ch, Week 199705 Derwent Publications Ltd., London, GB; Class A23, AN 1997-048398 XP002327994 -& JP 08 302000 A (TOYOBO KK) 19. November 1996 (1996-11-19)
- DATABASE WPI Section Ch, Week 199735 Derwent Publications Ltd., London, GB; Class A23, AN 1997-381338 XP002327995 -& JP 09 165440 A (NIPPON SYNTHETIC CHEM IND CO) 24. Juni 1997 (1997-06-24)

## Beschreibung

Gegenstand der Erfindung ist ein Verfahren zur Herstellung eines elastomeren Copolyesters aus Polybutylenterephthalat (PBT) und Polyoxytetramethylenglykol.

Aus der deutschen Patentschrift 35 44 551 ist bereits ein Verfahren zur kontinuierlichen Herstellung von hochmolekularem Polybutylenterephthalat durch Veresterung von Terephthalsäure mit 1,4-Butandiol bekannt. Dabei werden die Ausgangsstoffe zu einer Paste vermischt und in Gegenwart eines geeigneten Katalysators einer Veresterung zugeführt. Die Veresterung erfolgt dabei bei Drucken von 0,1 bis 0,6 bar, bei denen auch die Abspaltung von Wasser durchgeführt werden kann. Bei der Hauptreaktion der Carboxylgruppen mit den Hydroxylgruppen des 1,4-Butandiols findet zusätzlich noch eine Dehydratisierung des Butandiols zum Tetrahydrofuran statt, wobei in geringer Konzentration auch noch weitere Nebenprodukte entstehen können, deren Struktur und Menge vom Herstellungsverfahren des 1,4-Butandiols abhängig ist.

Die auf die Veresterung folgende Polykondensation erfolgt vorzugsweise bei Drucken von 0,25 bis 25 mbar und Temperaturen von etwa 270°C, wobei in nur einem einzigen Reaktionsapparat gearbeitet werden kann, der aus der Gruppe der Rührkessel, der liegenden Apparate vom Typ der Ringscheiben- und/oder Käfigreaktoren stammt. Das dabei entstehende langkettige Polykondensat enthält die Monomerbausteine in statistischer Verteilung.

Die nach den bisher bekannten Verfahren hergestellten Copolyester weisen wertvolle elastomere Eigenschaften auf und finden deshalb zunehmend technische Anwendung. Es besteht folglich ein Bedarf an weiteren Verbesserungen und Vereinfachungen der bekannten Verfahren, insbesondere an einer Senkung der bisher anfallenden erheblichen Kosten für Apparate und Energien.

Es wurde nun ein Verfahren zur Herstellung eines elastomeren Copolyesters aus Polybutylenterephthalat (PBT) und Polyoxytetramethylenglykol gefunden, bei dem das bei der Produktion von Polybutylenterephthalat aus 1,4-Butandiol als Nebenprodukt anfallende Tetrahydrofuran (THF) nach seiner Rektifikation durch eine ringöffnende Polymerisation zum Polyoxytetramethylenglykol umgesetzt wird, welches mit den freien oder veresterten Carboxylgruppen des PBT zum Copolyester kondensiert, wobei Kettenabbruch und Katalysatordeaktivierung durch Zusatz von 1,4-Butandiol ohne Katalysatorabtrennung erfolgen.

Das bei diesem Verfahren anfallende THF sowie das bei der Veresterung und Kondensation entstehende Wasser werden als flüchtige Phase aus dem Herstellungsprozess entfernt und das abgetrennte THF nach der Entfernung von Verunreinigungen durch eine kationische, ringöffnende Polymerisation zum Polyoxytetramethylenglykol polymerisiert. Dieses polymere Glykol wird dem PBT während der Umesterung, Vorkondensation oder Polykondensation zugegeben und als weiches Kettenelement in die Polymerkette eingebaut.

Dieses Kettenelement ist für die hervorragenden elastomeren Eigenschaften des erfindungsgemäß hergestellten Copolyesters von entscheidender Bedeutung.

Die Herstellung des als Ausgangsstoff dienenden Polybutylenterephthalats (PBT) durch Veresterung der Terephthalsäure mit 1,4-Butandiol oder durch Umesterung eines Terephthalsäurediester mit 1,4-Butandiol ist an sich bekannt. Bei dieser Reaktion entstehen durch eine Dehydratisierungsreaktion aus dem 1,4-Butandiol neben dem Hauptprodukt Tetrahydrofuran in geringer Menge auch Butenole sowie verschiedene Dihydrofurane und zyklische Äther. Die Menge und Art dieser Nebenprodukte hängt von dem Herstellungsverfahren des 1,4-Butandiols ab. Sie stören bei der Herstellung des elastomeren Copolyesters, für die ein hochreines THF erforderlich ist. Es ist deshalb notwendig, das durch Nebenreaktionen aus dem 1,4-Butandiol entstehende Produktgemisch durch eine Rektifikation sorgfältig zu reinigen. Um den damit verbundenen Aufwand möglichst gering zu halten, empfiehlt es sich, die Reaktion so zu steuern, dass aus dem 1,4-Butandiol das THF in möglichst hohen Konzentrationen gebildet wird und nur geringe Menge an störenden Nebenprodukten entstehen. Durch die Auswahl geeigneter Betriebsbedingungen, insbesondere dem Einsatz ausgewählter Drücke, Temperaturen und besonderer Katalysatoren während der Veresterung, Vorkondensation und Polykondensation kann die Menge des gebildeten THF auf 5 bis 60 Massen-% des eingesetzten 1,4-Butandiols eingestellt und gleichzeitig die Bildung von Nebenprodukten weitgehend unterdrückt werden. Vorteilhaft ist es bei Drucken von 0,05 bis 10 bar, bei Temperaturen zwischen 160 und 320°C sowie in Gegenwart von titanhaltigen, zinnhaltigen oder antimonhaltigen Katalysatoren zu arbeiten, die in einer Menge von 10⁻¹⁰ bis 10⁻² Mol pro Mol Terephthalsäure eingesetzt werden.

Das durch die zyklisierende Dehydratisierungsreaktion entstehende Tetrahydrofuran ist in den aus den aus dem Umesterungsreaktor und den Kondensationsreaktoren austretenden Brüden in unterschiedlicher Menge enthalten, wird kondensiert und vereinigt einer ersten Rektifikation zugeführt. Das am höchsten siedende 1,4-Butandiol verbleibt im Sumpf der Rektifikationskolonne und wird hauptsächlich in den Veresterungsreaktor zurückgeführt. Die leichter siedenden Komponenten des Kopfproduktes werden fraktioniert, kondensiert und so zu einem THF höchster Reinheit rektifiziert.

Zur Herstellung des für das erfindungsgemäße Verfahren erforderlichen Polyoxytetramethylenglykols durch kationische, ringöffnende Polymerisation ist es notwendig, in dem durch Rektifikation erhaltenen Produkt auch noch Spuren von Peroxyden zu entfernen. Das gelingt durch Zuführung von Wasserstoff. Außerdem ist eine sorgfältige Trocknung des so gewonnen THF erforderlich.

Das durch diese Verfahrensschritte gewonnene und hochreine THF wird dann durch Katalysatoren vom Lewis-Säure Typ wie Bortrifluorid, Antimonpentachlorid, Titantetrachlorid oder Halogensulfonsäuren (siehe Houben-Weyl, 4. Aufl. Band E20/1, Seiten 106 ff., 448 ff.) polymerisiert. Um Polyoxytetramethylenglykole mit mittleren Kettenlängen von 2 bis 10.000 Wiederholungseinheiten zu erzeugen, wird eine Katalysatormenge zwischen 10⁻¹² Mol bis 10⁻² Mol satormetall, bezogen auf THF, benötigt, wobei die Einspeisung bis zur Höchstmenge in den Reaktionskessel auch in mehreren Portionen erfolgen kann. Die Temperaturführung bei der ringöffnenden Polymerisation liegt zwischen -70 und +80°C und die Verweilzeit im Reaktionsgefäß beträgt zwischen 5 Minuten und 10 Stunden, wodurch sichergestellt ist, dass ein Polyoxytetramethylenglykol mit einer mittleren Kettenlänge von 2 bis 10.000 Wiederholungseinheiten hergestellt wird. Die Verteilung der Wiederholungseinheiten wird mittels Gelpermeationschromatographie in THF und Eichung gegen Polyoxytetramethylenglykol-Standards gemessen.

Die Polymerisation des THF wird in an sich bekannter Weise durch Kontrolle der Druck- und Temperaturbedingungen sowie der Verweilzeit im Reaktionsgefäß so gesteuert, dass eine enge Verteilung mit einer Polydispersität, definiert durch das Verhältnis von Gewichtsmittel zu Zahlenmittel des Molekulargewichts, erhalten wird, die im Allgemeinen nahe bei 1 liegt. Durch geeignete Polymerisationsbedingungen können aber auch Polyoxytetramethylenglykole mit einer Polydispersität bis zu 10 hergestellt werden, welche mit PBT nach dem erfindungsgemäßen Verfahren zu elastomeren Copolyestern kondensierbar sind. Der zur Berechnung der Polydispersität erforderliche Zahlenmittelwert des Molekulargewichts wird im Membranosmometer und der Gewichtsmittelwert durch Lichtstreuung bestimmt.

Das so erhaltene Polyoxytetramethylenglykol wird dem PBT in einer Menge von 1 bis 60 Massen-%, bezogen auf die Menge des PBT, während der Umesterung, der Vorkondensation oder der Polykondensation zugefügt.

Bei den bisher bekannten Herstellungsverfahren für elastomere Copolyester aus PBT und Polyoxytetramethylenglykol wird das Kettenwachstum durch Kettenabbrecher und/oder durch die Hydrolyse des Katalysators beendet. Nach dem Abbruch der Polymerisationsreaktion muss der Katalysator dann aus dem Produkt entfernt werden, da er bei einer Zumischung oder einem Blending des Polyoxytetramethylenglykols mit anderen Polymeren in einem Extruder bei höherer Temperatur zu Verfärbungen und Gelen führen kann. Das Problem der Polymerverfärbung durch Katalysatorreste kann deshalb nur dadurch gelöst werden, dass dieser in mehreren Waschstufen aus dem Polymer entfernt wird. Hierbei gehen aber auch noch niedermolekulare Anteile des Polyoxytetramethylenglykols in Lösung, wodurch sich die Molekulargewichtsverteilung verändert. Die Entfernung von Katalysatorresten durch Auswaschen hat außerdem den gravierenden Nachteil, dass Lösungs- und/oder Waschmittel mit niedermolekularen Polymeranteilen beladen sind, deren Entsorgung oder Aufbereitung einen zusätzlichen Aufwand verursacht. Entweder entsorgt man sie durch Verbrennen oder durch biologischen Abbau in einer Kläranlage oder man trennt das Lösungsmittel von den Beimischungen ab und führt es im Kreislauf.

Das erfindungsgemäße Verfahren vermeidet diese Nachteile der bisher üblichen Verfahren, da eine Zerstörung oder Abtrennung des Katalysators in einem besonderen Schritt nicht erforderlich ist und keine Lösungsmittel zur Aufbereitung eingesetzt werden müssen. In dem erfindungsgemäßen Verfahren wird das 1,4-Butandiol nicht nur als Baustein des Copolyesters, sondern auch als Kettenabbrecher eingesetzt. Es reagiert mit dem Lewis-Katalysator nicht nur, indem es diesen deaktiviert, sondern es bildet sich zum Beispiel durch die Umsetzung von Titantetrachlorid mit 1,4-Butandiol ein Titantetrabutylat, das als Katalysator bei der Polykondensation, ggf. zusammen mit weiteren zugesetzten Metallestern, die Bildung des elastomeren Copolyesters begünstigt. Hierdurch kann die Menge der zuzusetzenden Metallester-Katalysatoren reduziert werden.

Die zur Erzeugung des erfindungsgemäß hergestellten elastomeren Copolyesters aus Polyoxytetramethylenglykol und PBT eingesetzten Metallester bestehen aus den Elementen der I., II., III. IV. und V. Hauptgruppe und der III., IV., V., VI., VII. und VIII Nebengruppe des Periodischen Systems, ganz besonders bevorzugt bestehen sie aus Metallestern des V, Ta, Ti, Zr, Mn, Zn, B, Al, Si, Ge, P, Sb, Fe, Co, Ca, Mg oder Sn.

Typische Vertreter dieser Katalysatorklasse sind Barium-di-iso-propylat, Calcium-dimethylat, Calcium-di-i-propylat, Magnesium-dimethylat und -diethylat, Strontium-diisopropylat, Aluminium-triethylat, Aluminium-tri-i-propylat. Aluminium-tributylat, Aluminium-sec.-butylat, Aluminium-tert.-butylat, Aluminiumtriphenolat, Antimon-trimethylat, Antimon-triethylat, Antimon-tri-isopropylat, Antimon-tripropylat, Antimon-tributylat, Bor-trimethylat, Bor-triethylat, Bortripropylat, Bor-triisopropylat, Bor-tributylat, Bor-triphenolat, Erbiumtriisopropylat, Indium-triisopropylat, Indium-tert..-butylat, Neodym-triisopropylat, Vanadin(V)oxid-triethylat, Vanadin(V)oxyd-triisopropylat, Vanadin(V)oxyd-tripropylat, Ytterbium-trüsopropylat, Yttrium-triisopropylat, Yttrium-triisopropylat, Yttrium-triisobutylat, Trimethylphosphit, Triethylphosphit, Tripropylphosphit, Triisopropylphosphit, Tributylphosphit, Triphenylphosphit, Triisodecylphosphit, Trimethylphosphat, Triethylphosphat, Tripropylphosphat, Triisopropylphosphat, Triethylhexylphosphat, Tributylphosphat, Triphenylphosphat, Trikresylphosphat, Scandium-triisopropylat, Praseodym-triisopropylat, Germanium-methylat, Germanium-ethylat, Germanium-isopropylat, Hafnium-tert.-butylat, Tetramethoxysilan, Tetraethoxysilan, Tetrapropoxysilan, Tetrabutoxysilan, Tetramethoxy-titan, Tetraethoxy-titan, Tetraisopropoxy-titan, Tetrapropoxy-titan, Tetrabutoxy-titan, Tetra-tert.-butoxy-titan, Tetra-2-ethyl-hexanoxyat-titan, Tetra-2-ethyl-1,3-hexan-diolat-titan, Tetrabutoxy-stannan, Tetramethoxy-zirkon, Tetraethoxy-zirkon, Tetra-isopropoxy-zirkon, Tetrapropoxy-zirkon, Tetrabutoxy-zirkon, Tetra-tert.-butoxy-zirkon, Tantal (V)-methoxid, Tantal (V)-ethoxid, Tantal (V)-butoxid.

Das erfindungsgemäße Verfahren hat erhebliche wirtschaftliche Vorteile, da wegen der nicht erforderlichen Abtrennung des Katalysators, der nicht erforderlichen Aufbereitung des Polyoxytetramethylenglykols und eines zum Entfernen von Katalysatorresten erforderlichen Lösungsmittels bisher benötigte Anlagenteile überflüssig werden und durch die damit entfallenden Verfahrensschritte auch erhebliche Mengen an Energie eingespart werden können. Schließlich wird durch das erfindungsgemäße Verfahren auch die Umweltbelastung vermindert, da keine Stoffe verbrannt oder durch Klärverfahren gereinigt oder deponiert werden müssten.

Beim Verfahren zur Herstellung eines elastomeren Copolyesters kann das Polyoxytetramethylenglykol auch ohne vorherige Aufreinigung zum Einsatz kommen.

Von Vorteil ist es ferner, wenn der Katalysator zur Herstellung des Polyoxytetramethylenglykols und der Katalysator für die Polykondensation das gleiche Metall enthalten.

Das erfindungsgemäße Verfahren kann kontinuierlich oder diskontinuierlich durchgeführt werden, wie durch die beiden im Folgenden beschriebenen Ausführungsformen dargelegt ist:

### Ausführungsform 1:

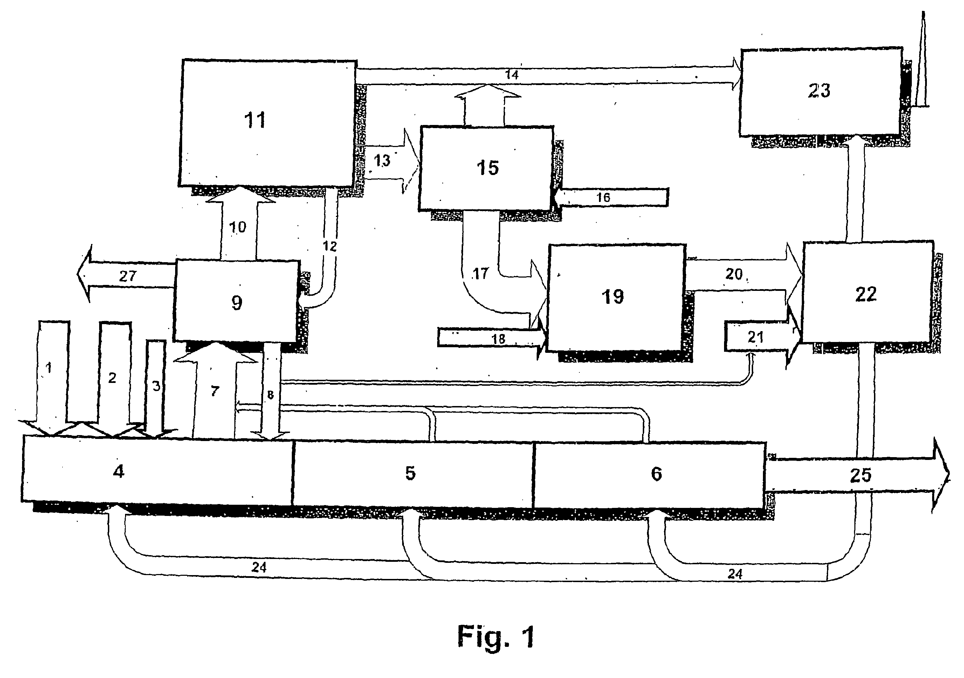

In Fig. 1 ist beispielhaft eine Anlage zur kontinuierlichen Herstellung eines elastomeren Copolyesters aus Polybutylenterephthalat (PBT) und Polyoxytetramethylenglykol beschrieben:

In der Veresterungsstufe (4) wird kontinuierlich eine zu einer Paste angerührte Mischung aus Terephthalsäure (1) und 1,4-Butandiol (2) mit einem Molverhältnis von 1 : 5 mit einem Katalysator (3), z.B. 500 ppm Zinn (IV)-tetrabutylat, vereinigt und einem Rührkessel zugeführt. Bei einem leichten Überdruck von etwa 0,25 MPa und 250°C wird die Veresterung eingeleitet und nach einer mittleren Verweilzeit von 5 Stunden in einem zweiten Reaktor bei reduziertem Druck von 0,1 MPa und einer Temperatur von etwa 235°C und einer Verweilzeit von 3 Stunden weitergeführt. Außer der Hauptreaktion der Carboxylgruppen der Terephthalsäure (1) mit den Hydroxylgruppen des 1,4-Butandiols (2) findet noch eine Dehydratisierung des Butandiols zum Tetrahydrofuran (10) statt, wobei in geringer Menge auch noch weitere Nebenprodukte entstehen.

Die den Reaktoren der Veresterung (4) entweichenden Brüden (7) enthalten in der Hauptsache Wasser und bis zu 60% Tetrahydrofuran, die der Spaltprodukttrennung (9) zugeführt werden. In der Spaltprodukttrennung (9) erfolgt in mindestens einer Kolonne unter leichtem Überdruck von 0,15 MPa durch mehrfache Rektifikation die Auftrennung von in den Brüden noch mitgeführtem 1,4-Butandiol (2), dem Spaltprodukt Wasser und dem leicht flüchtigem THF. Das im Sumpf der Kolonne (9) anfallende Butandiol (8) wird in den ersten Veresterungsreaktor (4) zurückgeführt und der Paste aus (1) und (2) zugemischt. Die Einspeisung eines Teilstroms von 10 bis zu 60 Massen-% des vorzugsweise in einem parallel durchgeführten Verfahrens erzeugten Polyoxytetramethylenglykols (25), das auch ohne eine Aufreinigung zum Einsatz kommen kann, erfolgt in den Umesterungsreaktor oder einen Kondensationsreaktor.

Die auf die Veresterung folgende Vorpolykondensation (5) wird bei etwa 250°C unter Vakuum bei 150 hPa durchgeführt, wobei nur ein Reaktor eingesetzt werden muss, und zwar entweder ein Rührkessel oder ein liegender Apparat vom Typ der Ringscheiben- und/oder Käfigreaktoren. Die der Vorkondensationsstufe (5) unter Vakuum entweichenden Brüden werden in Brüdenverdichtern kondensiert und die Kondensate dem Spaltproduktstrom (7) zugeführt. In der auf die Vorkondensation (5) folgenden Polykondensation (6), die zu längeren Polyesterketten bis hin zum Endprodukt (25) führt, wird bei einer um 20°C höheren Temperatur und einem Druck von 0,1 hPa die Polykondensation zu Ende geführt. Das Polyoxytetramethylenglykol wird dabei in statistischer Verteilung in die wachsenden Ketten des Copolyesters eingebaut.

Bei der Polykondensation der Carboxylgruppen des PBTs mit den Hydroxylgruppen des Polyoxytetramethylenglykols fällt Wasser als Reaktionsprodukt an. Außerdem entstehen bei der Dehydratisierung des 1,4-Butandiols neben dem Hauptprodukt Tetrahydrofuran in geringer Menge Butenole, verschiedene Dihydrofurane und weitere zyklische Äther. Außerdem ist in den Brüden noch 1,4-Butandiol enthalten, das dem weiteren Verfahren als Monomer erhalten bleiben soll. Die Auftrennung des Mehrstoffgemisches in der Spaltproduktrennung (9) erfordert mehrere Stufen, bei denen nach den unterschiedlichen Siedepunkten aufgetrennte Fraktionen separiert werden. Die hochsiedenden Anteile des Butandiols (8) werden dem Prozess wieder zugeführt, das entstandene Wasser (27) so behandelt, dass es nur noch geringe Verunreinigungen aufweist und einer biologischen Kläranlage übergeben werden kann. Das anfallende Tetrahydrofuran, das Roh-THF (10), enthält noch geringe Wassermengen und Bestandteile, die sich aufgrund von Azeotropbildungen in der Spaltproduktrennung (9) nicht entfernen lassen. Zur Beseitigung dieser Bestandteile wird das Roh-THF (10) einer weiteren Nebenproduktrektifikation (11) zugeführt, wobei neben des destillativen und rektifikativen Verfahren auch semipermeable Membranen mit gutem Erfolg eingesetzt werden können. Ein hochreines THF (13) verlässt dann die Nebenproduktrektifikationsstufe (11) und enthält nur noch geringe Spuren von Wasser und anderen Stoffen. Schwersieder, Leichtsieder und Abgase (14) aus der Spülung oder Inertisierung der Anlage mit Stickstoff werden abgezogen und einer Wärmeerzeugungsanlage (23) zugeführt, durch die die Versorgung der Polykondensationsanlage mit Hochtemperaturöl sichergestellt wird.

Zur Erzeugung von Polyoxytetramethylglykolen durch kationische Polymerisation ist das die Nebenproduktrektifikationsstufe (11) verlassende THF (13) noch nicht rein genug, denn es enthält noch peroxydische Bestandteile und Spuren von THF-Beiprodukten, die den Katalysator für die kationische Polymerisation deaktivieren könnten.

In der Stufe (15) werden durch Deperoxidierung, Reduktion und Trocknung an mehreren aufeinander folgenden Stufen an zeolithischen Trägern, wie sie z.B. von D.R. Burfiled in J. Org. Chem. 47, 3821 (1982) beschrieben sind, unter Einsatz eines geringen Wasserstoffstromes (16) die Peroxyde zerstört. Außerdem werden Doppelbindungen hydriert und die letzten Spuren von Wasser entfernt. Die Verfahrensstufe (15) wird zweisträngig so gestaltet, dass sich ein Teil der Anlage in der Regenerationsphase befindet, während in dem anderen Teil der Anlage die Reinigung des THF vorgenommen wird. Die bei der Regeneration anfallenden Abgase (15) werden mit dem Strom (14) vereinigt und der katalytischen Oxidation (23) zugeführt. THF (17), das den Anlagenteil (15) verlässt, erfüllt die Qualitätsanforderungen "polymer grade" mit einem Wassergehalt von weniger als 100 ppm, Dihydrofuranen unter 50 ppm und isomeren, substituierten THF-Derivaten unter 50 ppm. Ein solches THF ist ohne Einschränkungen in der THF Polymerisation (19) verwendbar.

THF kann beispielsweise in Gegenwart von 10⁻⁶ ppm Zinntetrachlorid, bezogen auf Tetrahydrofuran, polymerisiert werden. Die Temperaturführung in der mehrstufigen Rührkesselkaskade (19) liegt im Bereich zwischen -10 und +30°C und die Verweilzeit zwischen 2 und 4 Stunden ist so gewählt, dass ein Produkt mit Kettenlängen von 2 bis 10.000 Wiederholungseinheiten entsteht. Die Reaktionsführung bei der ringöffnenden Polymerisation des Tetrahydrofurans, wie von P. Dreyfuss und M.P. Dreyfuss in Adv. Polymer Sci., Vol, 4, Seiten 528 bis 590 (1967) beschrieben, wird mittels Temperaturführung, Katalysatortyp, Katalysatorkonzentration und Katalysatorzuspeisung so gesteuert, dass eine enge Verteilung mit einer Polydispersität, definiert durch das Verhältnis von Gewichtsmittel zu Zahlenmittel des Molekulargewichts, bevorzugt nahe bei 1 und nicht größer als 10 erzielt wird.

Bei den bisher bekannten Produktionsverfahren (siehe Encyclopedia auf Polymer Science und Engineering, Vol. 16, Seite 649 (1989)) wird das Kettenwachstum durch Kettenabbrecher und/oder die Hydrolyse des Katalysators beendet. Dies wird in der letzten Stufe (22) der Rührkesselkaskade vorgenommen, wobei es sich überraschenderweise herausgestellt hat, dass Butandiol als Kettenregler (21) eingesetzt werden kann. Die Verwendung von 1,4-Butandiol als Kettenregler (21) hat den Vorteil, dass es sich hierbei um einen Stoff handelt, der erfindungsgemäß als Monomer Verwendung findet und deshalb im Endprodukt kein Fremdstoff ist. Als besonders vorteilhaft hat es sich herausgestellt, als Kettenregler (21) ein Butandiol zu verwenden, das entweder einem Zwischenboden der Spaltprodukttrennkolonne (9) oder dem Sumpf entnommen wird. Die hiermit erhaltenen Polyoxytetramethylenglykole weisen bei der Einspeisung in die Veresterung (4), in die Vorkondensation (5) und/oder in die Polykondensation (6) eine höhere Reaktivität und bessere Filtrierbarkeit auf, als die bisher bekannten Polyoxytetramethylenglykole.

Da bei dem erfindungsgemäßen Verfahren die Katalysatorreste aus dem Endprodukt nicht entfernt werden müssen, weil sie auch in Gegenwart anderer Polymerer in einem Extruder bei hohen Temperaturen zu keinen Verfärbungen oder Gelen führen, können die sonst üblichen Waschstufen zur Katalysatorentfernung entfallen.

Die Begrenzung der Kettenlänge und die Deaktivierung des Katalysators kann auch mit anderen einwertigen oder mehrwertigen Alkoholen erfolgen. Besonders vorteilhaft ist jedoch aus den vorstehend genannten Gründen die Verwendung von 1,4-Butandiol. Die durch die Reaktion des 1,4-Butandiols mit den Metallkatalysatoren entstehenden Metallester fördern die Veresterung (4), die Vorkondensation (5) und/oder die Polykondensation (6).

Das die Verfahrensstufe (22) (Kettenabbruch) verlassende Polyoxytetramethylenglykol wird, wie in Fig. 1 gezeigt, entweder vollständig der Veresterung (4) der Vorkondensation (5) und/oder der Polykondensation (6) zugeführt oder in gleichen oder unterschiedlichen Mengen auf die Veresterungs- und Kondensationsreaktoren verteilt.

Der den Endreaktor der Polykondensation (6) verlassende elastomere Copolyester besteht aus einem Polybutylenterephthalatester-Grundpolymer, das mit statistisch verteilten Polyoxytetramethylenglykol-Gruppen modifiziert ist und die Eigenschaften eines in der Literatur (J. Brandrup und E.H. Immergut in Polymer Handbuch 3rd Edition, John Wiley & Sons, Seite V/107) beschriebenen Copolyesters aufweist.

### Ausführungsform 2:

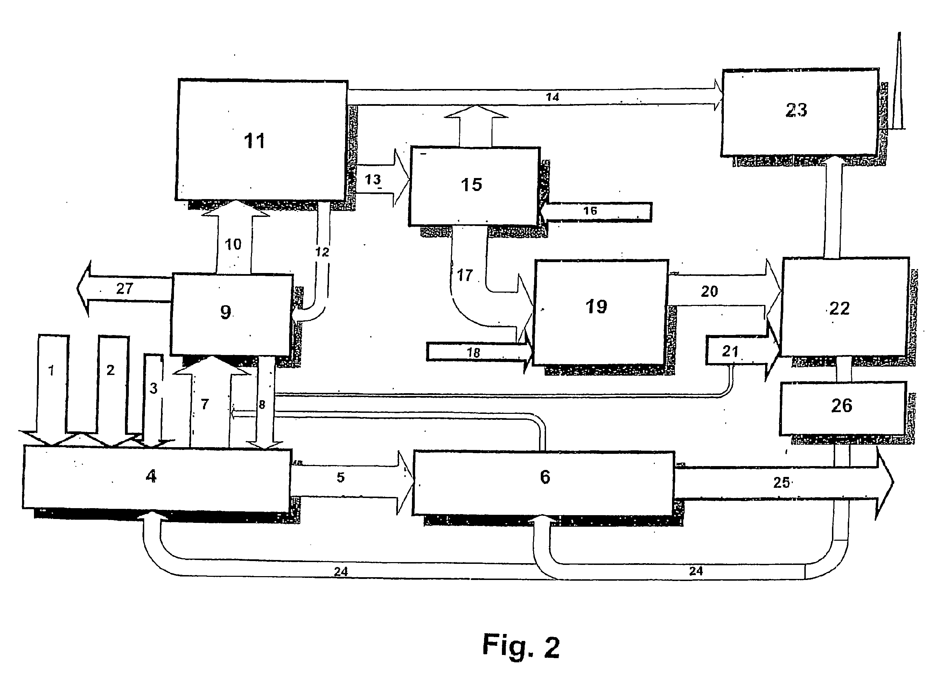

In Fig. 2 wird beispielhaft eine Anlage, wie sie vorstehend beschrieben wurde, für das erfindungsgemäße Verfahren zur diskontinuierlichen Herstellung eines elastomeren Copolyesters aus PBT und Polyoxytetramethylenglykol gezeigt.

In einen Veresterungsreaktor (4) wird kontinuierlich über einen Zeitraum von 15 Minuten bis zu 6 Stunden eine zu einer Paste angerührte Mischung mit einem Molverhältnis von 1 : 5 von Terephthalsäure (1) und 1,4-Butandiol (2) mit einem Katalysator (3), beispielsweise 500 ppm Zinn(IV)-tetrabutylat eingebracht. Beginnend mit einem Überdruck von etwa 0,35 MPa und bei etwa 210°C wird die Veresterung eingeleitet und nach einer mittleren Verweilzeit von 5 Stunden reduziert man den Druck im Laufe von 6 Stunden auf 0,1 MPa, erhöht aber gleichzeitig langsam steigend die Temperatur auf 250°C. Bei der Hauptreaktion der Carboxylgruppe der Terephthalsäure (1) mit den Hydroxylgruppen des 1,4-Butandiols (2) findet als Nebenreaktion eine Dehydratisierung des Butandiols zum Tetrahydrofuran (10) statt, wobei gleichzeitig weitere Nebenprodukte in geringer Konzentration entstehen. Die dem Veresterungsreaktor (4) entweichende Brüde (7) enthält in der Hauptsache Wasser und bis zu 60% Tetrahydrofuran, die kondensiert, gesammelt und der absatzweise arbeitenden Spaltprodukttrennung (9) zugeführt werden. In der Spaltprodukttrennung (9) erfolgt in mindestens einer Kolonne unter leichtem Überdruck von 0,75 MPa durch mehrfache Rektifikation die Trennung des in den Brüden noch mitgeführtem 1,4-Butandiols (2) von Wasser und von leicht flüchtigem THF. Das im Sumpf der Kolonne (9) anfallende Butandiol (8) wird in den Veresterungsreaktor (4) zurückgeführt oder gesammelt und dem nächsten Ansatz der Paste aus (1) und (2) zugemischt.

Gleichzeitig erfolgt in einem parallel durchgeführten Verfahren die Herstellung des Polyoxytetramethylenglykols (25) aus dem durch Rektifikation und Deperoxydierung gereinigten THF in gleicher Weise wie bei der kontinuierlichen Herstellung. Allerdings wird bei der diskontinuierlichen Herstellung das Polyoxytetramethylenglykol nicht direkt in den Veresterungsreaktor (4) oder den Polykondensationsreaktor (6) eingebracht, sondern zunächst in einem als Puffer dienenden Vorratsbehälter (26) gelagert. In diesem Vorratsbehälter erfolgt die Aufbewahrung des Polyoxytetramethylenglykols bei Temperaturen zwischen - 10 und +10°C. Eine Beheizungsvorrichtung ist vorgesehen, die eventuell erstarrtes Material wieder aufschmelzen kann, so dass es über Förderorgane und Dosiergeräte in der erforderlichen Menge von 10 bis 60 Massen-%, bezogen auf den erfindungsgemäß herzustellenden elastomeren Polyester, in den Veresterungsreaktor (4) oder den Polykondensationsreaktor (6) geleitet wird.

### Bezugszeichenliste:

- 1: Zugabe von Terephthalsäure
- 2: Zugabe von 1,4-Butandiol
- 3: Katalysatorzugabe
- 4: Reaktor für Veresterung und Umesterung
- 5: Reaktor für Vorkondensation und Polyumesterung
- 6: Reaktor für Polykondensation
- 7: Abtrennung von bei der Veresterung entstehenden gasförmigen und flüssigen Nebenprodukten
- 8: Zuleitung von 1,4-Butandiol
- 9: Auftrennung der bei der Veresterung und Kondensation entstandenen flüssigen und gasförmigen Nebenprodukte
- 10: Ableitung von rohem THF
- 11: Rektifikation von THF
- 12: Rückleitung von schwer siedenden Bestandteilen
- 13: Ableitung von THF
- 14: Ableitung von schwer siedenden und leicht siedenden Nebenprodukten und Abgasen
- 15: Deperoxidierung, Reduktion und Trocknung des THF
- 16: Zuleitung von Wasserstoff
- 17: Ableitung des polymerisationsfähigen THF
- 18: Zuleitung eines Katalysators
- 19: Polymerisation von THF
- 20: Zuleitung von rohem Polyoxytetramethylenglykol
- 21: Zugabe eines Kettenreglers
- 22: Kettenabbruch der Polymerisation
- 23: Wärmeerzeugung katalytischer Oxidation
- 24: Zuleitung von Polyoxytetramethylenglykol zur Veresterung und/oder Polykondensation
- 25: Ableitung des Endproduktes
- 26: Vorratsbehälter für Polyoxytetramethylenglykol
- 27: Ableitung von Wasser

## Patentansprüche

1. Verfahren zur Herstellung eines elastomeren Copolyesters aus Polybutylenterephthalat (PBT) und Polyoxytetramethylenglykol, **dadurch gekennzeichnet, dass** das bei der Polybutylenterephthalat-Herstellung aus 1,4-Butandiol als Nebenprodukt anfallende Tetrahydrofuran (THF) nach seiner Rektifikation durch eine ringöffnende Polymerisation zum Polyoxytetramethylenglykol umgesetzt wird, welches mit den freien oder veresterten Carboxylgruppen des PBT zum Copolyester kondensiert, wobei Kettenabbruch und Katalysatordeaktivierung durch Zusatz von 1,4-Butandiol ohne Katalysatorabtrennung erfolgen.

2. Verfahren nach Anspruch 1, **dadurch gekennzeichnet, dass** die Menge des Polyoxytetramethylenglykols 1 - 60 Massen% der Menge des PBT beträgt.

3. Verfahren nach Anspruch 1, **dadurch gekennzeichnet, dass** das Polyoxytetramethylenglykol durch eine ringöffnende, kationische Polymerisation unter Bildung einer mittleren Kettenlänge von 2 bis 10000 Wiederholungseinheiten hergestellt wird.

4. Verfahren nach Anspruch 1, **dadurch gekennzeichnet, dass** das bei der PBT-Herstellung anfallende THF einer Deperoxidierung sowie einer Trocknung unterzogen wird.

5. Verfahren nach Anspruch 1, **dadurch gekennzeichnet, dass** das Polyoxytetramethylenglykol dem PBT während der Vorkondensation oder der Polykondensation zugegeben wird.

6. Verfahren nach den Ansprüchen 3 und 5, **dadurch gekennzeichnet, dass** dem PBT ein Polyoxytetramethylenglykol zugesetzt wird, dessen Polydispersität kleiner als 10 ist.

7. Verfahren nach Anspruch 1, **dadurch gekennzeichnet, dass** das Polyoxytetramethylenglykol ohne vorherige Aufreinigung zum Einsatz kommt.

8. Verfahren nach den Ansprüchen 1 - 7, **dadurch gekennzeichnet, dass** die Herstellung des Copolyesters kontinuierlich oder diskontinuierlich erfolgt.

9. Verfahren nach Anspruch 1, **dadurch gekennzeichnet, dass** der Katalysator zur Herstellung des Polyoxytetramethylenglykols und der Katalysator für die Polykondensation das gleiche Metall enthalten.

## Claims

1. Process for the production of an elastomeric copolyester from polybutylene terephthalate (PBT) and polyoxytetramethylene glycol, **characterised in that** the tetrahydrofuran (THF) arising as secondary product during the production of polybutylene terephthalate from 1,4-butane diol is converted, after its rectification, by a ring opening polymerisation to polyoxytetramethylene glycol which condenses with the free or esterified carboxyl groups of PBT to copolyester, a chain termination and catalyst deactivation taking place by adding 1,4-butane diol without catalyst separation.

2. Process according to claim 1 **characterised in that** the quantity of polyoxytetramethylene glycol is 1 - 60 % by mass of the quantity of PBT.

3. Process according to claim 1 **characterised in that** the polyoxytetramethylene glycol is produced by a ring opening, cationic polymerisation with the formation of an average chain length of 2 to 10000 repeating units.

4. Process according to claim 1 **characterised in that** the THF obtained during the production of PBT is subjected to deperoxidation and drying.

5. Process according to claim 1 **characterised in that** the polyoxytetramethylene glycol is added to the PBT during pre-condensation or polycondensation.

6. Process according to claims 3 and 5 **characterised in that** a polyoxytetramethylene glycol whose polydispersity is less than 10 is added to the PBT.

7. Process according to claim 1 **characterised in that** the polyoxytetramethylene glycol is used without prior purification.

8. Process according to claim 1 - 7 **characterised in that** the production of the copolyester takes place continuously or discontinuously.

9. Process according to claim 1 **characterised in that** the catalyst for the production of the polyoxytetramethylene glycol and the catalyst for the polycondensation contain the same metal.

## Revendications

1. Procédé de préparation d'un copolyester élastomère à partir de polybutylènetéréphthalate (PBT) et de polyoxytétraméthylèneglycol, **caractérisé en ce que** le tétrahydrofuranne (THF) issu de la synthèse de polybutylènetéréphthalate à partir de 1,4-butanediol est rectifié pour ensuite être transformé, par polymérisation avec ouverture de l'anneau, en polyoxytétraméthylèneglycol, ce dernier entrant en réaction de condensation avec les groupes carboxyle libres ou estérifiés du PBT pour former le copolyester, la terminaison de chaîne et la désactivation du catalyseur étant effectuées, sans avoir enlevé le catalyseur, en ajoutant du 1,4-butanediol.

2. Procédé selon la revendication 1, **caractérisé en ce que** la quantité de polyoxytétraméthylèneglycol est comprise entre 1 et 60 % en poids par rapport à la quantité de PBT.

3. Procédé selon la revendication 1, **caractérisé en ce que** le polyoxytétraméthylèneglycol est préparé par une polymérisation cationique avec ouverture de l'anneau, la longueur moyenne des chaînes formées étant comprise entre 2 et 10.000 unités répétitives.

4. Procédé selon la revendication 1, **caractérisé en ce que** le THF issu de la synthèse de PBT est soumis à une élimination des peroxydes ainsi qu'à un séchage.

5. Procédé selon la revendication 1, **caractérisé en ce que** le polyoxytétraméthylèneglycol est ajouté au PBT lors de la précondensation ou de la polycondensation.

6. Procédé selon les revendications 3 et 5, **caractérisé en ce qu'**un polyoxytétraméthylèneglycol présentant une polydispersité inférieure à 10 est ajouté au PBT.

7. Procédé selon la revendication 1, **caractérisé en ce que** le polyoxytétraméthylèneglycol est mis en oeuvre sans purification préalable.

8. Procédé selon les revendications 1 à 7, **caractérisé en ce que** la préparation du copolyester est réalisée de manière continue ou discontinue.

9. Procédé selon la revendication 1, **caractérisé en ce que** le catalyseur pour la préparation du polyoxytétraméthylèneglycol et le catalyseur pour la polycondensation contiennent le même métal.
